# EUROPÄISCHE PATENTSCHRIFT

(11) **EP 2 851 187 B1**
(45) Veröffentlichungstag und Bekanntmachung des Hinweises auf die Patenterteilung: **19.12.2018**
(21) Anmeldenummer: 14185891.0
(22) Anmeldetag: 23.09.2014
(51) Int. Cl.: B30B 15/00, B30B 11/02, B22F 3/03

(54) **Verfahren zur Herstellung eines Presslings aus pulverförmigem Material**
Method for producing a pressed product from powdered material
Procédé destiné à la fabrication d'une pièce pressée en matériau pulvérulent

(30) Priorität: 24.09.2013 DE 102013110539
(43) Veröffentlichungstag der Anmeldung: 25.03.2015
(73) Patentinhaber: Fette Compacting GmbH, 21493 Schwarzenbek (DE)
(72) Erfinder: Behns, Holger, 21465 Reinbek (DE); Pannewitz, Thomas, 21514 Klein Pampau (DE); Groth, Andreas, 21493 Schwarzenbek (DE); Teetzen, Andreas, 21493 Schwarzenbek (DE)
(74) Vertreter: Hauck Patentanwaltspartnerschaft mbB

(56) Entgegenhaltungen:
- DE-A1-102010 051 513
- DE-A1-102011 116 552
- DE-A1-102012 019 312
- DE-A1-102013 012 085
- US-A1- 2002 170 337
- US-A1- 2007 033 981

## Beschreibung

Die Erfindung betrifft ein Verfahren zur Herstellung eines Presslings aus pulverförmigem Material in einer Presse, die folgende Merkmale umfasst: eine in einem Pressenrahmen angeordnete Presseinheit mit mindestens einem an einer oberen Stempelplatte angeordneten oberen Pressstempel und/oder mindestens einem an einer unteren Stempelplatte angeordneten unteren Pressstempel sowie mindestens einer Aufnahme für durch den oberen und/oder unteren Pressstempel zu verpressendes pulverförmiges Material, mindestens zwei obere Antriebseinheiten zum Verfahren des oberen Pressstempels in vertikaler Richtung, wobei die oberen Antriebseinheiten jeweils einen oberen elektrischen Antriebsmotor und einen durch den jeweiligen elektrischen Antriebsmotor angetriebenen oberen Spindeltrieb mit einer oberen Spindel und einer oberen Spindelmutter umfassen, und/oder mindestens zwei untere Antriebseinheiten zum Verfahren des unteren Pressstempels und/oder der Aufnahme in vertikaler Richtung, wobei die unteren Antriebseinheiten jeweils einen unteren elektrischen Antriebsmotor und einen durch den jeweiligen elektrischen Antriebsmotor angetriebenen unteren Spindeltrieb mit einer unteren Spindel und einer unteren Spindelmutter umfassen, wobei die oberen Antriebseinheiten über eine sich in horizontaler Richtung erstreckende obere Kraftübertragungsbrücke seitlich versetzt auf den mindestens einen oberen Pressstempel wirken und/oder wobei die unteren Antriebseinheiten über eine sich in horizontaler Richtung erstreckende untere Kraftübertragungsbrücke seitlich versetzt auf den mindestens einen unteren Pressstempel und/oder die Aufnahme wirken, und wobei zwischen den oberen Spindelmuttern und der oberen Kraftübertragungsbrücke jeweils mindestens ein oberes Ausgleichselement angeordnet ist, und/oder wobei zwischen den unteren Spindelmuttern und der unteren Kraftübertragungsbrücke jeweils mindestens ein unteres Ausgleichselement angeordnet ist.

Pressen der vorstehend genannten Art sind beispielsweise bekannt aus DE 10 2011 116 548 A1, DE 10 2011 116 552 A1 oder EP 2 479 022 A1. Weitere Pressen sind bekannt aus der nachveröffentlichten DE 10 2012 019 312 A1 und US 2002/0170337 A1. Bei bekannten Pressen weist eine Antriebsachse mindestens zwei Spindeln mit entsprechenden Spindelmuttern auf. Die Spindelmuttern können über eine Kraftübertragungsbrücke miteinander verbunden sein. Die Kraftübertragungsbrücke wird durch die Spindeltriebe in vertikaler Richtung verfahren und wirkt auf die Ober- bzw. Unterstempel, insbesondere über geeignete Stempelplatten. Es wurde auch bereits vorgeschlagen, zwischen den Spindelmuttern und der Kraftübertragungsbrücke beispielsweise flexible Ausgleichselemente vorzusehen. Die Ausgleichselemente sorgen dafür, dass sich eine eventuelle Verkippung oder Verbiegung der Kraftübertragungsbrücke nicht auf die Spindeltriebe überträgt. Insbesondere sollen die Spindeltriebe weiterhin streng vertikal ausgerichtet sein. Die Spindeltriebe werden während eines Pressvorgangs möglichst synchron zueinander betrieben. Auf diese Weise wird bei gängigen Presslingen ein gutes Pressergebnis erzielt.

Manchmal ist es allerdings erwünscht, Presslinge herzustellen, die sehr breit oder sehr lang oder beispielsweise keilförmig geformt sind. Die erforderliche Presskraft kann dann über die Ausdehnung des Presslings asymmetrisch sein. Eine dadurch bedingte asymmetrische Belastung wird über das Werkzeugführungsgestell abgefangen. Dabei kann es zu Verkippungen beispielsweise der Stempelplatten oder der Kraftübertragungsbrücken kommen. Hierdurch wird ein erhöhter Verschleiß bewirkt, insbesondere hinsichtlich der die Ober- und/oder Unterstempel aufweisenden Presseinheit. Außerdem wirkt sich eine solche Verkippung ungünstig auf das Pressergebnis aus.

Ausgehend von dem erläuterten Stand der Technik liegt der Erfindung die Aufgabe zugrunde, ein Verfahren der eingangs genannten Art bereitzustellen, mit dem unabhängig von der Presslingsform der Verschleiß verringert und das Pressergebnis optimiert werden kann.

Die Erfindung löst die Aufgabe durch den Gegenstand von Anspruch 1. Vorteilhafte Ausgestaltungen finden sich in den abhängigen Ansprüchen, der Beschreibung und die Figur. Für ein Verfahren der eingangs genannten Art löst die Erfindung die Aufgabe durch die Verfahrensschritte: während eines Pressvorgangs wird eine Verkippung der oberen und/oder unteren Kraftübertragungsbrücke und/oder der oberen und/oder unteren Stempelplatte und/oder eine diese Verkippung verursachende Kraft gemessen, abhängig von den ermittelten Messergebnissen werden die oberen Antriebseinheiten und/oder die unteren Antriebseinheiten während des Pressvorgangs jeweils derart asynchron zueinander verfahren, dass die verursachte Verkippung ausgeglichen wird.

Bei der bei dem erfindungsgemäßen Verfahren eingesetzten Presse können die Antriebsmotoren der oberen Antriebseinheiten an einer oberen Halteplatte des Pressenrahmens befestigt sein. Die Antriebsmotoren der unteren Antriebseinheiten können entsprechend an einer unteren Halteplatte des Pressenrahmens befestigt sein. Die obere und untere Halteplatte des Pressenrahmens können durch mehrere vertikale Abstandhalter miteinander verbunden sein. Zwischen der oberen und unteren Halteplatte des Pressenrahmens kann weiterhin ein an den vertikalen Abstandhaltern des Pressenrahmens angeordnetes Tragelement vorgesehen sein. Die Aufnahme zur Herstellung des Presslings kann an dem Tragelement angeordnet sein. Weiterhin können die mindestens zwei oberen Antriebseinheiten an gegenüberliegenden Enden der oberen Kraftübertragungsbrücke angreifen und/oder die mindestens zwei unteren Antriebseinheiten können an gegenüberliegenden Enden der unteren Kraftübertragungsbrücke angreifen.

Die bei der Presse vorgesehenen Ausgleichselemente gleichen in an sich bekannter Weise eine Verkippung oder ein Verbiegen der oberen und/oder unteren Kraftübertragungsbrücke gegenüber den oberen und/oder unteren Spindeltrieben aus. Sie sorgen also dafür, dass eine Verkippung oder ein Verbiegen der oberen und/oder unteren Kraftübertragungsbrücke nicht zu einer Verkippung der oberen und/oder unteren Spindeltriebe gegenüber der Vertikalen führt. Die oberen und/oder unteren Ausgleichselemente können jeweils auf gegenüberliegenden Seiten der oberen und/oder unteren Kraftübertragungsbrücke angeordnet sein. Die Ausgleichselemente können flexible Ausgleichselemente sein, die sich bei einer Verkippung bzw. einem Verbiegen der Kraftübertragungsbrücke zum Ausgleich verformen. Es ist jedoch auch möglich, dass die Ausgleichselemente jeweils drehbar an den oberen Spindelmuttern einerseits und an der oberen Kraftübertragungsbrücke andererseits gelagert sind und/oder dass die Ausgleichselemente jeweils drehbar an den unteren Spindelmuttern einerseits und an der unteren Kraftübertragungsbrücke anderseits gelagert sind. In diesem Fall erfolgt der Ausgleich durch ein Drehen der Ausgleichselemente um die beiden Drehachsen. Jede der oberen Spindelmuttern kann darüber hinaus jeweils durch zwei obere Ausgleichselemente mit der oberen Kraftübertragungsbrücke verbunden sein. Entsprechend kann jede der unteren Spindelmuttern jeweils durch zwei untere Ausgleichselemente mit der unteren Kraftübertragungsbrücke verbunden sein.

Wie eingangs erläutert, tritt eine asymmetrische Kraft während eines Pressvorgangs insbesondere auf, wenn ein asymmetrisch geformter Pressling verpresst wird, zum Beispiel ein sehr langer oder sehr breiter Pressling oder ein Pressling mit sich in Längsrichtung ändernden Dicke. Eine Asymmetrie der während des Pressvorgangs auftretenden Kraft bedeutet insbesondere, dass sich die Kraftverteilung in horizontaler Richtung ändert. Es wirkt also beispielsweise auf die Kraftübertragungsbrücken eine sich entlang ihrer jeweiligen Längsrichtung ändernde Kraft. Die obere und/oder die untere Stempelplatte erstrecken sich im Ruhezustand ebenso wie die obere und/oder untere Kraftübertragungsbrücke in horizontaler Richtung. Tritt eine wie vorstehend erläutert asymmetrische Kraft während eines Pressvorgangs auf, kann dies entsprechend sowohl eine Verkippung der Kraftübertragungsbrücken als auch eine Verkippung der Stempelplatten gegenüber der Horizontalen bewirken. Gerade die vorteilhaft vorgesehenen Ausgleichselemente verhindern jedoch, dass eine durch eine asymmetrische Kraft bedingte Verkippung der Stempelplatten oder der Kraftübertragungsbrücken an den Spindeltrieben erkannt werden kann. Zwar verfügen die Spindeltriebe in der Regel über einen Positionssensor, beispielsweise einen sogenannten Drehgeber. Diese Positionssensoren können aber einen beispielsweise durch eine Verkippung der Kraftübertragungsbrücken bedingten sich ändernden Spalt zwischen den Spindelmuttern und der Kraftübertragungsbrücke aufgrund der Ausgleichselemente nicht feststellen.

Erfindungsgemäß kann daher eine während des Pressvorgangs auftretende asymmetrische Kraft, die zu einer Verkippung der oberen und/oder unteren Stempelplatten und/oder Kraftübertragungsbrücken führt, durch entsprechende Kraftmesseinrichtungen direkt gemessen werden. Alternativ oder zusätzlich ist es erfindungsgemäß möglich, eine durch eine solche asymmetrische Kraft bewirkte Verkippung der Stempelplatten und/oder Kraftübertragungsbrücken messtechnisch zu erfassen. Sofern eine direkte Kraftmessung erfolgt, ist es beispielsweise denkbar, die Kraftmesseinrichtungen in die Ausgleichselemente zu integrieren.

Auf Grundlage der erfindungsgemäß erzielten Messergebnisse werden die oberen Antriebseinheiten gezielt asynchron zueinander angetrieben und/oder werden die unteren Antriebseinheiten gezielt asynchron zueinander angetrieben. Insbesondere werden die oberen bzw. unteren Spindeltriebe asynchron verfahren. Ein solches asynchrones Verfahren der Spindeltriebe führt im Normalfall zu einer Verkippung der Kraftübertragungsbrücken bzw. der Stempelplatten. Erfindungsgemäß wird dieser Effekt gerade genutzt, um eine durch eine asymmetrische Kraft bewirkte Verkippung der Kraftübertragungsbrücken bzw. der Stempelplatten gezielt wieder auszugleichen. Es kann eine Regeleinrichtung vorgesehen sein, die die Antriebseinheiten auf Grundlage der erlangten Messergebnisse in dazu geeigneter Weise ansteuert.

Gemäß der Erfindung werden also asymmetrische Presskräfte über asynchron betriebene Spindeltriebe realisiert. Dadurch wird insbesondere bei besonderen Presslingsformen ein Verkippen der Stempelplatten oder Kraftübertragungsbrücken vermieden. So kann zur Korrektur einer auftretenden Verkippung gezielt einer der oberen bzw. einer der unteren Spindeltriebe nachgeregelt werden, wodurch eine asymmetrische Presskraftverteilung bewirkt wird. Der Verschleiß beim Betrieb der Presse wird durch das erfindungsgemäße Verfahren verringert. Außerdem werden unabhängig von der Presslingsform optimale Pressergebnisse erzielt.

Außerdem ist das erfindungsgemäße Verfahren besonders geeignet, wenn mehrere Oberstempel und/oder mehrere Unterstempel zur Herstellung mehrerer Presslinge gleichzeitig vorgesehen sind. Bei solchen Pressen sind die Stempelpaare in Bezug auf das Zentrum der Kraftübertragungsbrücken außermittig angeordnet, so dass sich auch bei konventionellen symmetrischen Presslingen asymmetrische Kraftverteilungen und damit Verkippungen der Stempelplatten und/oder der Kraftübertragungsbrücken einstellen können. Diese können mit dem erfindungsgemäßen Verfahren gezielt ausgeglichen werden. Dabei wird der die Verkippung erzeugenden asymmetrischen Kraft während eines Pressvorgangs durch asynchrones Verfahren der Spindeltriebe gezielt entgegengewirkt.

Nach einer Ausgestaltung kann vorgesehen sein, dass die Kraft gemessen wird mittels mindestens zweier zwischen der oberen Kraftübertragungsbrücke und der oberen Stempelplatte in Längsrichtung der oberen Kraftübertragungsbrücke versetzt zueinander angeordneten oberen Kraftmesseinrichtungen und/oder mittels mindestens zweier zwischen der unteren Kraftübertragungsbrücke und der unteren Stempelplatte in Längsrichtung der unteren Kraftübertragungsbrücke versetzt zueinander angeordneten unteren Kraftmesseinrichtungen. Bei dieser Ausgestaltung werden in der Flucht der oberen und/oder unteren Kraftübertragungsbrücke mindestens zwei in Horizontalrichtung versetzt zueinander angeordnete Kraftmesseinrichtungen vorgesehen. Aus einer Differenz der von den Kraftmesseinrichtungen gemessenen Kraftwerte kann auf eine während des Pressvorgangs auftretende asymmetrische Kraft und damit eine Verkippung der Stempelplatten und/oder Kraftübertragungsbrücken geschlossen werden.

Nach einer weiteren Ausgestaltung kann vorgesehen sein, dass während des Pressvorgangs eine Messung des Abstands zwischen den oberen und/oder unteren Spindelmuttern und mit den oberen und/oder unteren Spindelmuttern verbundenen gegenüberliegenden Enden der oberen und/oder unteren Kraftübertragungsbrücke erfolgt und daraus eine Verkippung der oberen und/oder unteren Kraftübertragungsbrücke ermittelt wird. Es erfolgt bei dieser Ausgestaltung also mittels geeigneter und an sich bekannter Abstandsmesseinrichtungen eine Messung des Abstandes zwischen den mindestens zwei oberen Spindelmuttern und den mit ihnen verbundenen Enden der oberen Kraftübertragungsbrücke und/oder zwischen den mindestens zwei unteren Spindelmuttern und den mit ihnen verbundenen Enden der unteren Kraftübertragungsbrücke. Wiederum kann aus einer Differenzbildung zwischen den ermittelten Abstandswerten auf eine Verkippung geschlossen werden, die dann durch gezieltes asynchrones Verfahren der Spindeltriebe ausgeglichen werden kann.

Nach einer weiteren Ausgestaltung kann während des Pressvorgangs eine Messung des von der oberen und/oder unteren Kraftübertragungsbrücke gegenüber dem Pressenrahmen zurückgelegten Wegs erfolgen und daraus eine Verkippung der oberen und/oder unteren Kraftübertragungsbrücke ermittelt werden. Bei dieser Ausgestaltung wird also mittels geeigneter und an sich bekannter Wegmesseinrichtungen ein von der Kraftübertragungsbrücke gegenüber dem Pressenrahmen zurückgelegter Weg gemessen. Insbesondere wird der jeweils von den gegenüberliegenden Enden der jeweiligen Kraftübertragungsbrücke gegenüber dem Pressenrahmen zurückgelegte Weg gemessen. Aus einer Differenzbildung dieser Messwerte kann wiederum auf eine Verkippung der oberen und/oder unteren Kraftübertragungsbrücke geschlossen werden. Es können bei dieser Ausgestaltung geeignete Wegmesseinrichtungen zwischen den gegenüberliegenden Enden der jeweiligen Kraftübertragungsbrücke und den diesen gegenüberliegenden Seiten des Pressenrahmens angeordnet sein.

Nach einer weiteren Ausgestaltung kann vorgesehen sein, dass während eines Pressvorgangs ein zwischen einer Unterseite oder einer Oberseite der oberen Kraftübertragungsbrücke und einer Oberseite bzw. einer Unterseite der oberen Spindelmuttern gebildeter oberer Spalt gemessen wird und/oder dass während eines Pressvorgangs ein zwischen einer Unterseite oder einer Oberseite der unteren Kraftübertragungsbrücke und einer Oberseite bzw. einer Unterseite der unteren Spindelmuttern gebildeter unterer Spalt gemessen wird, und dass aus den Messungen des oberen und/oder unteren Spalts eine Verkippung der oberen und/oder unteren Kraftübertragungsbrücke ermittelt wird. Wiederum kann aus einer Differenzbildung der zwischen den oberen Spindelmuttern und den mit diesen befestigten gegenüberliegenden Enden der oberen Kraftübertragungsbrücke und/oder zwischen den unteren Spindelmuttern und den mit diesen befestigten gegenüberliegenden Enden der unteren Kraftübertragungsbrücke gemessenen Spalte auf eine Verkippung der oberen und/oder unteren Kraftübertragungsbrücke geschlossen werden.

Nach einer weiteren Ausgestaltung kann während des Pressvorgangs eine Messung des von der oberen und/oder unteren Stempelplatte gegenüber dem Pressenrahmen zurückgelegten Wegs erfolgen und daraus eine Verkippung der oberen und/oder unteren Stempelplatte ermittelt werden. In analoger Weise wie oben zu den Kraftübertragungsbrücken erläutert, wird mittels geeigneter und an sich bekannter Wegmesseinrichtungen der von gegenüberliegenden Seiten der Stempelplatten gegenüber den gegenüberliegenden Seiten des Pressenrahmens zurückgelegte Weg gemessen. Aus einer Differenzbildung dieser Wegmessungen kann dann auf eine Verkippung der Stempelplatten geschlossen werden.

Wie bereits erwähnt, kann erfindungsgemäß während des Pressvorgangs ein asymmetrisch geformter Pressling erzeugt werden, beispielsweise ein länglicher Pressling mit in Längsrichtung sich ändernder Dicke, beispielsweise ein keilförmiger Pressling.

Ein Ausführungsbeispiel der Erfindung wird nachfolgend anhand einer Figur näher erläutert. Die einzige Figur zeigt schematisch eine bei dem erfindungsgemäßen Verfahren eingesetzte Presse in einer Ansicht von vorne.

Die Presse weist einen Pressenrahmen mit einer oberen Halteplatte 12 und einer unteren Halteplatte 14 auf. Über beispielsweise vier in vertikaler Richtung verlaufende Abstandhalter 16 sind die oberen und unteren Halteplatten 12, 14 miteinander und mit einem zwischen der oberen und unteren Halteplatte 12, 14 etwa mittig angeordneten Tragelement 18 verbunden. Das Tragelement 18 ist in dem gezeigten Beispiel einstückig ausgebildet und besitzt ein in einer horizontalen Ebene liegendes U-Profil. Die untere Halteplatte 14 steht über in dem gezeigten Beispiel vier Stützbeine 20 auf dem Untergrund auf. Die Presse weist darüber hinaus eine obere Stempelplatte 22 mit einem nicht gezeigten Oberstempel und eine untere Stempelplatte 24 mit einem ebenfalls nicht gezeigten Unterstempel auf. Bei dem Bezugszeichen 25 ist eine vertikale Säule zu erkennen. Zwischen der oberen Stempelplatte 22 und der unteren Stempelplatte 24 ist eine Matrizenplatte 26 angeordnet mit einer nicht gezeigten Aufnahme für durch die Ober- und Unterstempel zu verpressendes Pulver, beispielsweise ein Metall- oder Keramikpulver. Die obere Stempelplatte 22, die untere Stempelplatte 24 und die Matrizenplatte 26 sind in dem gezeigten Beispiel über vier in vertikaler Richtung verlaufende Führungssäulen 28 miteinander verbunden. Die Matrizenplatte 26 ist in dem gezeigten Beispiel über die Führungssäule 25 direkt an dem Tragelement 18 befestigt. Die Presseinheit bildet einen Adapter, der als Ganzes der Presse entnommen werden kann, beispielsweise für eine Wartung oder einen Austausch.

Die Presse umfasst darüber hinaus zwei obere Antriebseinheiten zum vertikalen Verfahren der oberen Stempelplatte 22 und zwei untere Antriebseinheiten zum vertikalen Verfahren der unteren Stempelplatte 24. Die oberen und unteren Antriebseinheiten sind jeweils auf gegenüberliegenden Seiten des Pressenrahmens angeordnet. Die oberen Antriebseinheiten umfassen jeweils einen auf der oberen Halteplatte 12 angeordneten oberen elektrischen Antriebsmotor 30, 31 und jeweils einen oberen Spindeltrieb. Die oberen Spindeltriebe umfassen jeweils ein oberes Festlager 32, 33. Die Festlager 32, 33 sind jeweils direkt an der Oberseite des Tragelements 18 befestigt. Die elektrischen oberen Antriebsmotoren 30, 31 treiben jeweils eine axial feststehende obere Spindel 34, 35 an. Die Spindeln 34, 35 sind in dem gezeigten Beispiel durch die vertikalen Abstandhalter 16 größtenteils verdeckt. Auf den oberen Spindeln 34, 35 ist jeweils eine obere Spindelmutter 36, 37 axial beweglich drehend gelagert. Bei einer Drehung der oberen Spindel 34, 35 kommt es somit zu einer axialen Bewegung der jeweiligen oberen Spindelmutter 36, 37. Die oberen Spindelmuttern 36, 37 sind an gegenüberliegenden Enden einer oberen sich in horizontaler Richtung erstreckenden balkenförmigen Kraftübertragungsbrücke 38 befestigt. Die Kraftübertragungsbrücke 38 wiederum ist über ein weiteres Kraftübertragungselement 40 mittig mit der oberen Stempelplatte 22 verbunden. Die oberen Antriebseinheiten mit ihren oberen Antriebsmotoren 30, 31 wirken über die Kraftübertragungsbrücke 38 also seitlich versetzt auf die obere Stempelplatte 22 und damit den Oberstempel.

Der Aufbau der beiden unteren Antriebseinheiten ist insoweit identisch zu dem Aufbau der beiden oberen Antriebseinheiten. So weisen die unteren Antriebseinheiten jeweils einen an der unteren Halteplatte 14 angeordneten unteren elektrischen Antriebsmotor 42, 43 auf. Die unteren Antriebsmotoren 42, 43 treiben jeweils eine axial feststehende untere Spindel 44, 45 drehend an. Jeweils ein unteres Festlager 46, 47 der unteren Spindeln 44, 45 ist an der Unterseite des Tragelements 18 direkt befestigt. Wiederum ist auf den unteren Spindeln 44, 45 jeweils eine axial bewegliche untere Spindelmutter 50, 51 angeordnet. Die unteren Spindelmuttern 50, 51 sind wiederum an gegenüberliegenden Enden einer unteren balkenförmigen Kraftübertragungsbrücke 52 angeordnet, die über ein weiteres Kraftübertragungselement 54 mittig mit der unteren Stempelplatte 24 verbunden ist. Treiben die unteren elektrischen Antriebsmotoren 42, 43 die unteren Spindeln 44, 45 drehend an, kommt es wiederum zu einer axialen Bewegung der unteren Spindelmuttern 50, 51, die über die untere Kraftübertragungsbrücke 52 und das Kraftübertragungselement 54 auf die untere Stempelplatte 24 übertragen wird, so dass diese in vertikaler Richtung bewegt wird. Wiederum wirken die unteren Antriebseinheiten mit ihren unteren Antriebsmotoren 42, 43 also über die untere Kraftübertragungsbrücke 52 seitlich versetzt auf die untere Stempelplatte 24 und damit den Unterstempel.

Die oberen und unteren Spindelmuttern 36, 37, 50, 51 sind mit der oberen bzw. der unteren Kraftübertragungsbrücke 38, 52 jeweils durch geeignete Ausgleichselemente verbunden. Die Ausgleichselemente dienen dazu, eine eventuelle Verkippung der Stempelplatten 22, 24 oder der Kraftübertragungsbrücken 38, 52 auszugleichen, so dass diese nicht zu einer entsprechenden Verkippung der Spindeltriebe gegenüber der Vertikalen führt. Zum Einsatz können beispielsweise flexible Ausgleichselemente kommen. Es ist aber auch möglich, dass Ausgleichselemente jeweils über Drehlager an der oberen bzw. unteren Kraftübertragungsbrücke 38, 52 einerseits und an den oberen bzw. unteren Spindelmuttern 36, 37, 50, 51 andererseits drehbar gelagert sind und auf diese Weise eine Verkippung ausgleichen. Derartige Ausgleichselemente sind beispielsweise in DE 10 2013 012 085 B4 der Anmelderin beschrieben. Außerdem kann eine in den Figuren schematisch dargestellte Drehmomentstütze bzw. Verdrehsicherung vorgesehen sein, die eine mit den Spindelmuttern 36, 37, 50, 51 jeweils verschraubte Versteifungsplatte 76 umfasst, die vorliegend in einer horizontalen Ebene angeordnet ist. Die Versteifungsplatte 76 kann über beispielsweise zwei Abstützelemente 80 mit der jeweiligen Kraftübertragungsbrücke 38, 52 verschraubt sein. Die Drehmomentstütze sichert gegen ein unerwünschtes Verdrehen.

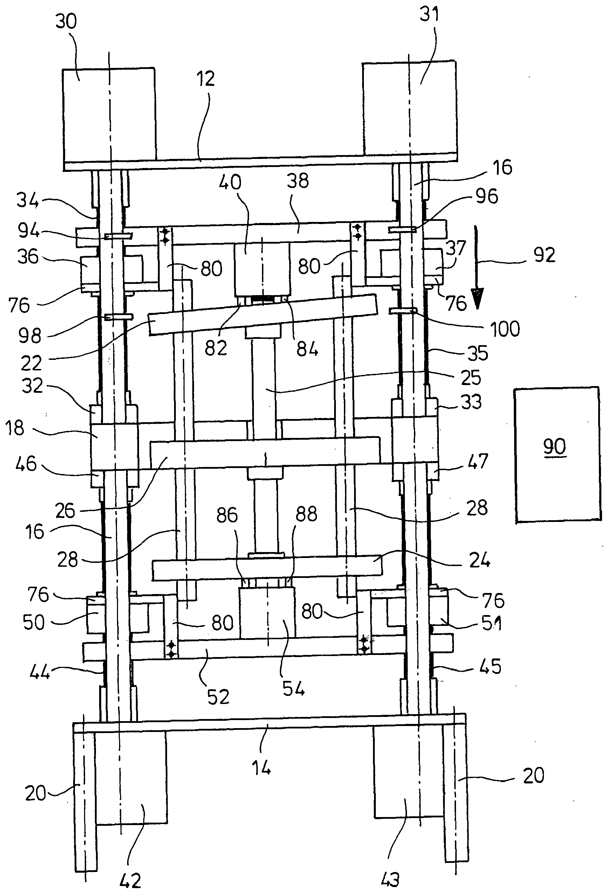

In dem gezeigten Beispiel sind darüber hinaus mehrere im Folgenden erläuterte Messeinrichtungen dargestellt. Sie sind beispielhaft und teilweise nur für die oberen Komponenten der Presseinheit, insbesondere die obere Stempelplatte 22 und die obere Kraftübertragungsbrücke 38, dargestellt. Es versteht sich, dass sämtliche derartige Messeinrichtungen auch im Bereich der unteren Komponenten der Presseinheit, also insbesondere unteren Stempelplatte 24 und der unteren Kraftübertragungsbrücke 52 vorgesehen sein können. Darüber hinaus müssen selbstverständlich nicht sämtliche der in Fig. 1 gezeigten Messeinrichtungen vorgesehen sein. Es ist vielmehr möglich, dass nur eine oder nur einige der nachfolgend beschriebenen Messeinrichtungen vorgesehen sind.

Zum einen sind zwischen der oberen Stempelplatte 22 und der oberen Kraftübertragungsbrücke 38, insbesondere zwischen der oberen Stempelplatte 22 und dem Kraftübertragungselement 40 zwei in Längsrichtung der oberen Kraftübertragungsbrücke 38, in der Figur also von links nach rechts versetzt zueinander angeordnete Kraftmesseinrichtungen 82, 84 vorgesehen. Entsprechende Kraftmesseinrichtungen 86, 88 sind in dem gezeigten Beispiel auch zwischen der unteren Stempelplatte 24 und der unteren Kraftübertragungsbrücke 52 bzw. zwischen der unteren Stempelplatte 24 und dem unteren Kraftübertragungselement 54 vorgesehen. Kommt es im Zuge eines Pressvorgangs beispielsweise beim Verpressen eines keilförmigen Presslings zu einer asymmetrischen Presskraft und dadurch zu einem Verkippen der Stempelplatten, wie in der Figur zur Veranschaulichung übertrieben für die obere Stempelplatte 22 dargestellt, messen die Kraftmesseinrichtungen 82, 84 unterschiedliche Kräfte. In dem gezeigten Beispiel misst die Kraftmesseinrichtung 84 eine größere Kraft als die Kraftmesseinrichtung 82. Die Messwerte der Kraftmesseinrichtungen 82, 84 bzw. 86, 88 werden über geeignete Verbindungen einer in der Figur sehr schematisch bei dem Bezugszeichen 90 gezeigten Regeleinrichtung zugeführt. Aus einer Differenz zwischen den in dem gezeigten Beispiel von den Kraftmesseinrichtungen 82, 84 gemessenen Kraftwerten kann auf eine Verkippung der oberen Stempelplatte 22 geschlossen werden. Auf dieser Grundlage steuert die Regeleinrichtung 90 die oberen Antriebseinheiten, insbesondere die oberen elektrischen Antriebsmotoren 30, 31 asynchron an. Dabei wird der in der Figur rechte obere elektrische Antriebsmotor 31 so angesteuert, dass die von diesem Antriebsmotor 31 in Axialrichtung bewegte obere Spindelmutter 37 weiter in vertikaler Richtung nach unten verfahren wird als die in der Figur linke obere Spindelmutter 36. Dies ist in der Figur durch den Pfeil 92 veranschaulicht. Die Regeleinrichtung steuert dieses asynchrone Verfahren der Spindeltriebe derart, dass die Verkippung der oberen Stempelplatte 22 wieder ausgeglichen wird, so dass die obere Stempelplatte 22 wieder in einer horizontalen Ebene liegt.

Alternativ oder zusätzlich zu einer Kraftmessung durch die Kraftmesseinrichtungen 82, 84, 86, 88 können Wegmesseinrichtungen vorgesehen sein. In der Figur sind solche Wegmesseinrichtungen schematisch bei den Bezugszeichen 94, 96, 98, 100 gezeigt. Die Wegmesseinrichtungen 94, 96 messen in dem gezeigten Beispiel den während eines Pressvorgangs von den gegenüberliegenden Enden der Kraftübertragungsbrücke 38 in Bezug auf gegenüberliegende Seiten des Pressenrahmens, vorliegend gegenüber den in der Figur links und rechts gezeigten vertikalen Abstandhaltern 16, zurückgelegten Weg. Wiederum werden die Messergebnisse der Regeleinrichtung 90 zugeführt. Aus einer Differenzbildung der Messwerte kann die Regeleinrichtung 90 auf eine Verkippung der Kraftübertragungsbrücke 38 schließen, die dann wiederum durch ein asynchrones Verfahren der oberen elektrischen Antriebsmotoren 30, 31 ausgeglichen werden kann.

In analoger Weise messen die Wegmesseinrichtungen 98, 100 den während eines Pressvorgangs von den gegenüberliegenden Enden, vorliegend den links und rechts in der Figur zu erkennenden Enden der oberen Stempelplatte 22 wiederum in Bezug auf gegenüberliegende Seiten des Pressenrahmens, insbesondere den in der Figur links und rechts dargestellten vertikalen Abstandhaltern 16, zurückgelegten Weg. Die Messwerte werden wiederum der Regeleinrichtung 90 zugeführt und aus einer Differenzbildung wird von der Regeleinrichtung 90 auf eine Verkippung der Stempelplatte 22 geschlossen. Diese kann dann wiederum in der oben erläuterten Weise durch ein asynchrones Verfahren der oberen elektrischen Antriebsmotoren 30, 31 kompensiert werden.

Die Erfindung erlaubt das Verpressen praktisch beliebig geformter Presslinge bei optimalen Pressergebnissen und geringem Verschleiß.

## Patentansprüche

1. Verfahren zur Herstellung eines Presslings aus pulverförmigem Material in einer Presse, die folgende Merkmale umfasst:
- eine in einem Pressenrahmen angeordnete Presseinheit mit mindestens einem an einer oberen Stempelplatte (22) angeordneten oberen Pressstempel und/oder mindestens einem an einer unteren Stempelplatte (24) angeordneten unteren Pressstempel sowie mindestens einer Aufnahme für durch den oberen und/oder unteren Pressstempel zu verpressendes pulverförmiges Material,
- mindestens zwei obere Antriebseinheiten zum Verfahren des oberen Pressstempels in vertikaler Richtung, wobei die oberen Antriebseinheiten jeweils einen oberen elektrischen Antriebsmotor (30, 31) und einen durch den jeweiligen elektrischen Antriebsmotor (30, 31) angetriebenen oberen Spindeltrieb mit einer oberen Spindel (34, 35) und einer oberen Spindelmutter (36, 37) umfassen, und/oder mindestens zwei untere Antriebseinheiten zum Verfahren des unteren Pressstempels und/oder der Aufnahme in vertikaler Richtung, wobei die unteren Antriebseinheiten jeweils einen unteren elektrischen Antriebsmotor (42, 43) und einen durch den jeweiligen elektrischen Antriebsmotor (42, 43) angetriebenen unteren Spindeltrieb mit einer unteren Spindel (44,45) und einer unteren Spindelmutter (50, 51) umfassen,
- wobei die oberen Antriebseinheiten über eine sich in horizontaler Richtung erstreckende obere Kraftübertragungsbrücke (38) seitlich versetzt auf den mindestens einen oberen Pressstempel wirken und/oder wobei die unteren Antriebseinheiten über eine sich in horizontaler Richtung erstreckende untere Kraftübertragungsbrücke (52) seitlich versetzt auf den mindestens einen unteren Pressstempel und/oder die Aufnahme wirken, und
- wobei zwischen den oberen Spindelmuttern (36, 37) und der oberen Kraftübertragungsbrücke (38) jeweils mindestens ein oberes Ausgleichselement zum Ausgleichen eines Verkippens oder eines Verbiegens der oberen Kraftübertragungsbrücke (38) gegenüber dem oberen Spindeltrieb angeordnet ist, und/oder wobei zwischen den unteren Spindelmuttern (50, 51) und der unteren Kraftübertragungsbrücke (52) jeweils mindestens ein unteres Ausgleichselement zum Ausgleichen eines Verkippens oder eines Verbiegens der unteren Kraftübertragungsbrücke (52) gegenüber dem unteren Spindeltrieb angeordnet ist,
**gekennzeichnet durch** die Verfahrensschritte
- während eines Pressvorgangs wird eine Verkippung der oberen (38) und/oder unteren Kraftübertragungsbrücke (52) und/oder der oberen (22) und/oder unteren Stempelplatte (24) und/oder eine diese Verkippung verursachende Kraft gemessen,
- abhängig von den ermittelten Messergebnissen werden die oberen Antriebseinheiten und/oder die unteren Antriebseinheiten während des Pressvorgangs jeweils derart asynchron zueinander verfahren, dass die verursachte Verkippung ausgeglichen wird.

2. Verfahren nach Anspruch 1, **dadurch gekennzeichnet, dass** die Kraft gemessen wird mittels mindestens zweier zwischen der oberen Kraftübertragungsbrücke (38) und der oberen Stempelplatte (22) in Längsrichtung der oberen Kraftübertragungsbrücke (38) versetzt zueinander angeordneten oberen Kraftmesseinrichtungen (82, 84) und/oder mittels mindestens zweier zwischen der unteren Kraftübertragungsbrücke (52) und der unteren Stempelplatte (24) in Längsrichtung der unteren Kraftübertragungsbrücke (52) versetzt zueinander angeordneten unteren Kraftmesseinrichtungen (86, 88).

3. Verfahren nach einem der vorhergehenden Ansprüche, **dadurch gekennzeichnet, dass** während des Pressvorgangs eine Messung des Abstands zwischen den oberen (36, 37) und/oder unteren Spindelmuttern (50, 51) und mit den oberen (36, 37) und/oder unteren Spindelmuttern (50, 51) verbundenen gegenüberliegenden Enden der oberen (38) und/oder unteren Kraftübertragungsbrücke (52) erfolgt und daraus eine Verkippung der oberen (38) und/oder unteren Kraftübertragungsbrücke (52) ermittelt wird.

4. Verfahren nach einem der vorhergehenden Ansprüche, **dadurch gekennzeichnet, dass** während des Pressvorgangs eine Messung des von der oberen (38) und/oder unteren Kraftübertragungsbrücke (52) gegenüber dem Pressenrahmen zurückgelegten Weg erfolgt und daraus eine Verkippung der oberen (38) und/oder unteren Kraftübertragungsbrücke (52) ermittelt wird.

5. Verfahren nach einem der vorhergehenden Ansprüche, **dadurch gekennzeichnet, dass** während eines Pressvorgangs ein zwischen einer Unterseite oder einer Oberseite der oberen Kraftübertragungsbrücke (38) und einer Oberseite bzw. einer Unterseite der oberen Spindelmuttern (36, 37) gebildeter oberer Spalt gemessen wird und/oder dass während eines Pressvorgangs ein zwischen einer Unterseite oder einer Oberseite der unteren Kraftübertragungsbrücke (52) und einer Oberseite bzw. einer Unterseite der unteren Spindelmuttern (50, 51) gebildeter unterer Spalt gemessen wird, und dass aus den Messungen des oberen und/oder unteren Spalts eine Verkippung der oberen (38) und/oder unteren Kraftübertragungsbrücke (52) ermittelt wird.

6. Verfahren nach einem der vorhergehenden Ansprüche, **dadurch gekennzeichnet, dass** während des Pressvorgangs eine Messung des von der oberen (22) und/oder unteren Stempelplatte (24) gegenüber dem Pressenrahmen zurückgelegten Weg erfolgt und daraus eine Verkippung der oberen (22) und/oder unteren Stempelplatte (24) ermittelt wird.

7. Verfahren nach einem der vorhergehenden Ansprüche, **dadurch gekennzeichnet, dass** die oberen und/oder unteren Ausgleichselemente jeweils auf gegenüberliegenden Seiten der oberen (38) und/oder unteren Kraftübertragungsbrücke (52) angeordnet sind.

8. Verfahren nach einem der vorhergehenden Ansprüche, **dadurch gekennzeichnet, dass** die mindestens zwei oberen Antriebseinheiten an gegenüberliegenden Enden der oberen Kraftübertragungsbrücke (38) angreifen und/oder dass die mindestens zwei unteren Antriebseinheiten an gegenüberliegenden Enden der unteren Kraftübertragungsbrücke (52) angreifen.

9. Verfahren nach einem der vorhergehenden Ansprüche, **dadurch gekennzeichnet, dass** während des Pressvorgangs ein asymmetrisch geformter Pressling erzeugt wird.

## Claims

1. A method for producing a pressed product from powdered material in a press, which comprises the following features:
- a press unit arranged in a press frame with at least one upper press punch arranged on an upper punch plate (22) and/or at least one lower press punch arranged on a lower punch plate (24) as well as at least one receptacle for powdered material to be pressed by the upper and/or lower press punch,
- at least two upper drive units for moving the upper press punch in a vertical direction, wherein the upper drive units each comprise one upper electric drive motor (30, 31) and one upper spindle drive driven by the respective electric drive motor (30, 31) and having an upper spindle (34, 35) and an upper spindle nut (36, 37), and/or at least two lower drive units for moving the lower press punch and/or the receptacle in a vertical direction, wherein the lower drive units each comprise a lower electric drive motor (42, 43) and a lower spindle drive driven by the respective electric drive motor (42, 43) and having a lower spindle (44, 45) and a lower spindle nut (50, 51),
- wherein the upper drive units act laterally offset on the at least one upper press punch by means of an upper force transmission bridge (38) extending in a horizontal direction, and/or wherein the lower drive units act laterally offset on the at least one lower press punch and/or the receptacle by means of a lower force transmission bridge (52) extending in a horizontal direction, and
- wherein at least one upper compensation element for compensating a tilting or a bending of the upper force transmission bridge (38) with respect to the upper spindle drive is arranged in each case between the upper spindle nuts (36, 37) and the upper force transmission bridge (38), and/or wherein at least one lower compensation element for compensating a tilting or a bending of the lower force transmission bridge (52) with respect to the lower spindle drive is arranged in each case between the lower spindle nuts (50, 51) and the lower force transmission bridge (52),
**characterized by** the method steps
- a tilting of the upper (38) and/or lower force transmission bridge (52) and/or the upper (22) and/or lower punch plate (24) and/or a force causing this tilting is measured during a pressing operation,
- depending on the determined measuring results, the upper drive units and/or the lower drive units are in each case moved asynchronously towards one another during the pressing operation in such a way that the tilting caused is compensated.

2. The method according to Claim 1, **characterized in that** the force is measured by means of at least two upper force measuring apparatuses (82, 84) arranged offset from one another between the upper force transmission bridge (38) and the upper punch plate (22) in the longitudinal direction of the upper force transmission bridge (38), and/or by means of at least two lower force measuring apparatuses (86, 88) arranged offset from one another between the lower force transmission bridge (52) and the lower punch plate (24) in the longitudinal direction of the lower force transmission bridge (52).

3. The method according to any one of the preceding claims, **characterized in that** the distance between the upper (36, 37) and/or lower spindle nuts (50, 51) and opposite ends of the upper (38) and/or lower force transmission bridge (52) connected to the upper (36, 37) and/or lower spindle nuts (50, 51) is measured during the pressing operation, and a tilting of the upper (38) and/or lower force transmission bridge (52) is determined therefrom.

4. The method according to any one of the preceding claims, **characterized in that** the path traveled by the upper (38) and/or lower force transmission bridge (52) with respect to the press frame is measured during the pressing operation, and a tilting of the upper (38) and/or lower force transmission bridge (52) is determined therefrom.

5. The method according to any one of the preceding claims, **characterized in that** an upper gap formed between a bottom side or a top side of the upper force transmission bridge (38) and a top side or respectively a bottom side of the upper spindle nuts (36, 37) is measured during a pressing operation, and/or a lower gap formed between a bottom side or a top side of the lower force transmission bridge (52) and a top side or respectively a bottom side of the lower spindle nuts (50, 51) is measured during a pressing operation, and a tilting of the upper (38) and/or lower force transmission bridge (52) is determined from the measurements of the upper and/or lower gap.

6. The method according to any one of the preceding claims, **characterized in that** during the pressing operation the path traveled by the upper (22) and/or lower punch plate (24) with respect to the press frame is measured and a tilting of the upper (22) and/or lower punch plate (24) is determined therefrom.

7. The method according to any one of the preceding claims, **characterized in that** the upper and/or lower compensation elements are each arranged on opposite sides of the upper (38) and/or lower force transmission bridge (52).

8. The method according to any one of the preceding claims, **characterized in that** the at least two upper drive units act on opposite ends of the upper force transmission bridge (38) and/or the at least two lower drive units act on opposite ends of the lower force transmission bridge (52).

9. The method according to any one of the preceding claims, **characterized in that** an asymmetrically shaped pressed product is produced during the pressing operation.

## Revendications

1. Presse pour la fabrication d'une pièce pressée en matériau pulvérulent, comportant les caractéristiques suivantes :
- une unité de presse disposée dans un châssis de presse, avec au moins un poinçon de pressage supérieur disposé sur une plaque de poinçon supérieure (22) et/ou au moins un poinçon de pressage inférieur disposé sur une plaque de poinçon inférieure (24), ainsi qu'au moins un logement pour un matériau pulvérulent à presser par le poinçon de pressage supérieur et/ou inférieur,
- au moins deux unités d'entraînement supérieures pour le déplacement du poinçon de pressage supérieur dans la direction verticale, les unités d'entraînement supérieures comportant respectivement un moteur d'entraînement électrique supérieur (30, 31) et un mécanisme à broche supérieur entraîné par le moteur d'entraînement électrique (30, 31) respectif, avec une broche supérieure (34, 35) et un écrou de broche supérieur (36, 37), et/ou au moins deux unités d'entraînement inférieures pour le déplacement du poinçon de pressage inférieur et/ou du logement dans la direction verticale, les unités d'entraînement inférieures comportant respectivement un moteur d'entraînement électrique inférieur (42, 43) et un mécanisme à broche inférieur entraîné par le moteur d'entraînement électrique (42, 43) respectif, avec une broche inférieure (44, 45) et un écrou de broche inférieur (50, 51),
- dans lequel les unités d'entraînement supérieures agissent sur l'au moins un poinçon de pressage supérieur de façon décalée latéralement par le biais d'un pont de transmission de force supérieur (38) s'étendant horizontalement et/ou dans lequel les unités d'entraînement inférieures agissent sur l'au moins un poinçon de pressage inférieur et/ou le logement de façon décalée latéralement par le biais d'un pont de transmission de force inférieur (52) s'étendant horizontalement, et
- dans lequel au moins un élément de compensation supérieur est disposé respectivement entre les écrous de broche supérieurs (36, 37) et le pont de transmission de force supérieur (38), pour compenser un basculement ou un fléchissement du pont de transmission de force supérieur (38) par rapport au mécanisme à broche supérieur, et/ou dans lequel au moins un élément de compensation inférieur est disposé respectivement entre les écrous de broche inférieurs (50, 51) et le pont de transmission de force inférieur (52) pour compenser un basculement ou un fléchissement du pont de transmission de force inférieur (52) par rapport au mécanisme à broche inférieur,
**caractérisé par** les étapes de procédé suivantes :
- pendant une opération de pressage, mesure d'un basculement du pont de transmission de force supérieur (38) et/ou du pont de transmission de force inférieur (52) et/ou de la plaque de poinçon supérieure (22) et/ou de la plaque de poinçon inférieure (24) et/ou d'une force provoquant ce basculement,
- en fonction des résultats de mesure, déplacement asynchrone des unités d'entraînement supérieures et/ou des unités d'entraînement inférieures les unes par rapport aux autres pendant l'opération de pressage, de manière à compenser le basculement occasionné.

2. Presse selon la revendication 1, **caractérisée en ce que** la force est mesurée au moyen d'au moins deux dispositifs de mesure de force supérieurs (82, 84) disposés de façon décalée l'un par rapport à l'autre entre le pont de transmission de force supérieur (38) et la plaque de poinçon supérieure (22) dans la direction longitudinale du pont de transmission de force supérieur (38) et/ou au moyen d'au moins deux dispositifs de mesure de force inférieurs (86, 88) disposés de façon décalée l'un par rapport à l'autre entre le pont de transmission de force inférieur (52) et la plaque de poinçon inférieure (24) dans la direction longitudinale du pont de transmission de force inférieur (52).

3. Procédé selon l'une des revendications précédentes, **caractérisé en ce que** pendant l'opération de pressage, une mesure de l'écart entre les écrous de broche supérieur (36, 37) et/ou les écrous de broche inférieurs (50, 51) et des extrémités opposées du pont de transmission de force supérieur (38) et/ou du pont de transmission de force inférieur (52) reliées aux écrous de broche supérieur (36, 37) et/ou aux écrous de broche inférieurs (50, 51) est réalisée, et un basculement du pont de transmission de force supérieur (38) et/ou du pont de transmission de force inférieur (52) est ainsi déterminé.

4. Procédé selon l'une des revendications précédentes, **caractérisé en ce que** pendant l'opération de pressage, une mesure du trajet parcouru par le pont de transmission de force supérieur (38) et/ou par le pont de transmission de force inférieur (52) par rapport au châssis de presse est réalisée et un basculement du pont de transmission de force supérieur (38) et/ou du pont de transmission de force inférieur (52) est ainsi déterminé.

5. Procédé selon l'une des revendications précédentes, **caractérisé en ce que** pendant une opération de pressage, une fente supérieure formée entre un côté inférieur ou un côté supérieur du pont de transmission de force supérieur (38) et un côté supérieur ou un côté inférieur des écrous de broche supérieurs (36, 37) est mesurée, et/ou **en ce que** pendant une opération de pressage, une fente inférieure formée entre un côté inférieur ou un côté supérieur du pont de transmission de force inférieur (52) et un côté supérieur ou un côté inférieur des écrous de broche inférieurs (50, 51) est mesurée, et **en ce qu'**un basculement du pont de transmission de force supérieur (38) et/ou du pont de transmission de force inférieur (52) est déterminé à partir des mesures de la fente supérieure et/ou de la fente inférieure.

6. Procédé selon l'une des revendications précédentes, **caractérisé en ce que** pendant l'opération de pressage, une mesure du trajet parcouru par la plaque de poinçon supérieure (22) et/ou par la plaque de poinçon inférieure (24) par rapport au châssis de presse est réalisée et un basculement de la plaque de poinçon supérieure (22) et/ou de la plaque de poinçon inférieure (24) est ainsi déterminé.

7. Procédé selon l'une des revendications précédentes, **caractérisé en ce que** les éléments de compensation supérieurs et/ou inférieurs sont disposés respectivement sur des côtés opposés du pont de transmission de force supérieur (38) et/ou du pont de transmission de force inférieur (52).

8. Procédé selon l'une des revendications précédentes, **caractérisé en ce que** les au moins deux unités d'entraînement supérieures viennent en prise avec des extrémités opposées du pont de transmission de force supérieur (38) et/ou **en ce que** les au moins deux unités d'entraînement inférieures viennent en prise avec des extrémités opposées du pont de transmission de force inférieur (52).

9. Procédé selon l'une des revendications précédentes, **caractérisé en ce que** pendant l'opération de pressage, une pièce pressée de forme asymétrique est fabriquée.
